# DEMANDE DE BREVET EUROPEEN

(11) **EP 2 372 266 A1**
(43) Date de publication de la demande: **05.10.2011**
(21) Numéro de dépôt: 11160578.8
(22) Date de dépôt: 31.03.2011
(51) Int. Cl.: F24J 2/46, F24J 2/54, H01L 31/042

(54) **Plateforme pour panneaux solaires**

(30) Priorité: 31.03.2010 FR 1052430
(71) Demandeur: GCMSD, 70140 Pesmes (FR)
(72) Inventeur: Corberant, Gérard, 70140 Pesmes (FR)
(74) Mandataire: Brungard, Yves Francois

(57) **Abrégé**

Plateforme (1,1A,1B) productrice d'électricité à partir de panneaux solaires (2,2A,2B) photovoltaïques et constituée par au moins une base de référence (3,3A,3B) posée sur toute surface fixe ou instable (4,4A,4B), et sur laquelle est disposé au moins un panneau solaire (2,2A,2B), relié d'une part à ladite base (3,3A,3B) par l'intermédiaire d'une articulation fixe (5,5A,5B), disposée à l'extrémité supérieure d'un mât vertical (10,10A,10B) surmontant la base de référence (3,3A,3B), et d'autre part à une articulation mobile (6,6A,6B) reliée à un bras de manoeuvre (7,7A,7B), à l'extrémité duquel est rapporté un élément suiveur (8,8A,8B), apte à rester en contact avec la surface fixe ou instable (4,4A,4B), caractérisée en ce qu'un second bras de manoeuvre (13A), comportant à son extrémité libre un second élément suiveur (14A), apte à rester en contact avec la surface fixe ou instable (4A), est relié au panneau solaire (2A) par l'intermédiaire d'une articulation (15A), disposée sur celui-ci, à l'opposé de l'articulation mobile (6A) du premier élément suiveur (8A), par rapport à l'articulation fixe (5A) du mât vertical (10A) de la base de référence (3A), ledit second bras de manoeuvre (13A) étant assujetti indirectement au premier (7A).

## Description

La présente invention concerne une plateforme productrice d'électricité à partir de panneaux solaires photovoltaïques.

Des plateformes de ce type sont connues, mais la difficulté rencontrée dans leur mise en oeuvre tient au fait que les moyens d'orientation optimum des panneaux en fonction de la position du soleil, généralement utilisés lorsque ceux-ci sont disposés sur la terre ferme ou tout support fixe, ne sont pas adaptés, comme on peut le comprendre, lorsque l'installation de telles plateformes s'effectue sur une surface stable ou non stable.

Or l'exploitation des étendues libres, de toutes natures, présente l'intérêt de préserver les terres pour les cultures.

Selon une première phase de la démarche inventive, il a été recherché un dispositif hybride s'adaptant à toutes les situations.

Dans ce but, la présente invention concerne une plateforme productrice d'électricité à partir de panneaux solaires photovoltaïques et constituée par au moins une base de référence posée sur toute surface fixe ou instable, et sur laquelle est disposé au moins un panneau solaire, relié d'une part à ladite base par l'intermédiaire d'une articulation fixe, disposée à l'extrémité supérieure d'un mât vertical surmontant la base de référence, et d'autre part à une articulation mobile reliée à un bras de manoeuvre, à l'extrémité duquel est rapporté un élément suiveur, apte à rester en contact avec la surface fixe ou instable, caractérisée en ce qu'un second bras de manoeuvre, comportant à son extrémité libre un second élément suiveur, apte à rester en contact avec la surface fixe ou instable, est relié au panneau solaire par l'intermédiaire d'une articulation, disposée sur celui-ci, à l'opposé de l'articulation mobile du premier élément suiveur, par rapport à l'articulation fixe du mât vertical de la base de référence, ledit second bras de manoeuvre étant assujetti indirectement au premier.

Cette innovation permet d'installer sur une étendue quelconque un ou plusieurs panneaux photovoltaïques. La surface exploitable peut aller de quelques mètres carrés à plusieurs hectares. L'intérêt est d'utiliser la surface pour optimiser le rendement, en modifiant l'inclinaison des panneaux par un système écologique et automatique ou semi automatique.

L'installation peut ne comporter qu'un module, mais dans le cas de centrale de production électrique d'importance, communément appelée « fermes solaires », plusieurs modules peuvent être couplés mécaniquement et électriquement. Suivant les conditions météorologiques et l'exposition du site, le type de couplage peut varier.

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:
Les figures 1 et 2 représentent schématiquement une plateforme hybride porteuse d'un panneau solaire orientable, selon l'invention, dans deux positions différentes en fonction de la position du soleil.
Les figures 3 et 4 représentent schématiquement une plateforme hybride porteuse d'un panneau solaire orientable, selon une variante de réalisation de l'invention, dans deux positions différentes en fonction de la position du soleil.
Les figures 5, 6 et 7 représentent schématiquement une plateforme hybride porteuse d'un panneau solaire orientable, selon une deuxième variante de réalisation de l'invention, dans trois positions différentes en fonction de la position du soleil.

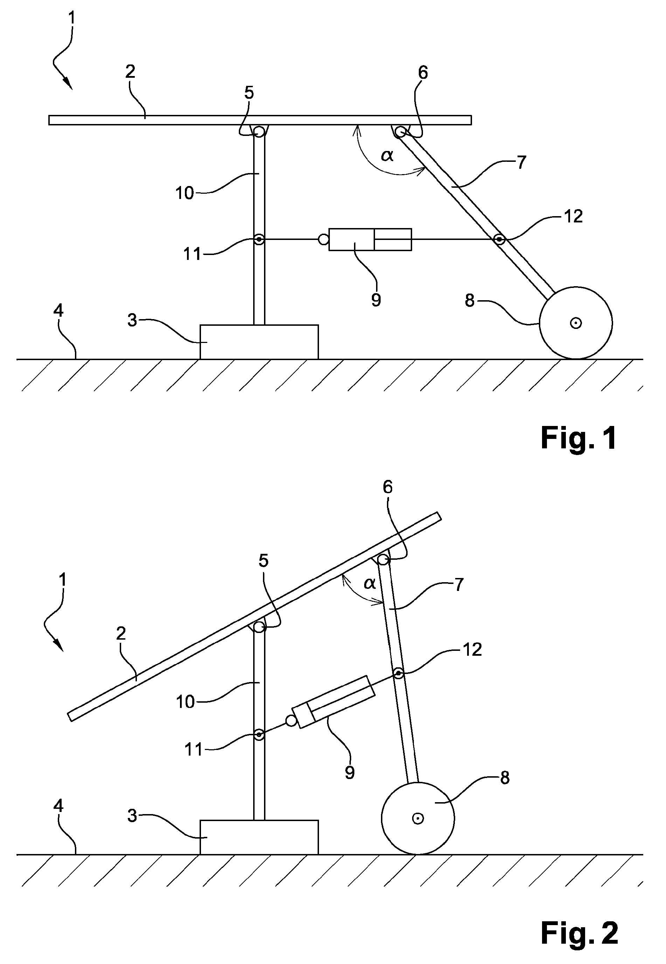

La plateforme hybride 1 selon l'invention, présentée sur les figures 1 et 2, est constituée par au moins une base de référence 3 posée sur toute surface fixe ou instable 4, et sur laquelle est disposé au moins un panneau solaire 2, relié d'une part à ladite base 3 par l'intermédiaire d'une première articulation fixe 5, et d'autre part à au moins une seconde articulation mobile 6 reliée à un bras de manoeuvre 7, à l'extrémité duquel est rapporté un élément suiveur 8, apte à rester en contact avec la surface fixe ou instable 4, quel que soit la valeur angulaire « α » donnée au bras 7 par rapport au panneau 2, par l'intermédiaire d'un organe d'asservissement 9 mécanique, électrique, pneumatique ou hydraulique, reliant le bras de manoeuvre 7 à la base de référence 3, ladite valeur angulaire « α » correspondant à l'orientation optimum du panneau 2 en fonction de la position variable du soleil.

Préférentiellement, la base de référence 3 est surmontée d'un mât vertical 10, à l'extrémité supérieure duquel est agencée la première articulation fixe 5 du panneau solaire 2, l'organe d'asservissement 9 étant interposé entre une troisième articulation fixe 11, située dans une zone intermédiaire du mât vertical 10, et une quatrième articulation mobile 12, située dans une zone intermédiaire du bras de manoeuvre 7.

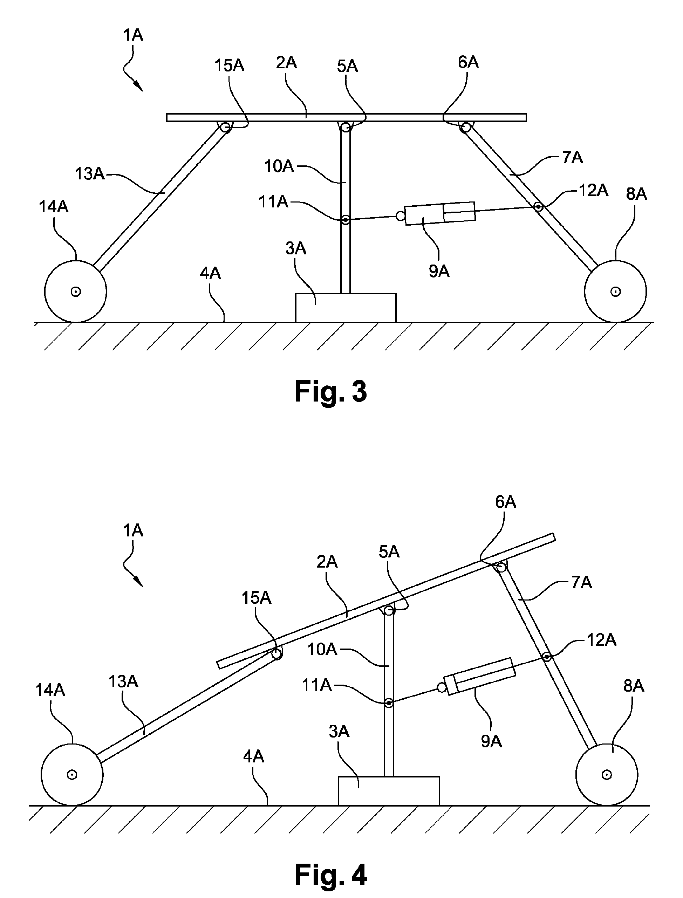

Selon une variante de réalisation représentée sur les figures 3 et 4, la plateforme 1A diffère essentiellement de la précédente en ce qu'un second bras de manoeuvre 13A, comportant à son extrémité libre un second élément suiveur 14A, apte à rester en contact avec la surface fixe ou instable 4A, est relié au panneau solaire 2A par l'intermédiaire d'une cinquième articulation 15A, disposée sur celui-ci, à l'opposé de la seconde articulation mobile 6A du premier élément suiveur 8A, par rapport à la première articulation fixe 5A du mât vertical 10A de la base de référence 3A, ledit second bras de manoeuvre 13A étant assujetti indirectement au premier 7A, s'affranchissant ainsi d'un second organe d'asservissement.

Les bras de manoeuvre 7A et 13A ici représentés sont divergents, mais ils pourraient bien entendu également être convergents. Dans un cas comme dans l'autre, ils constitueront un polygone déformable.

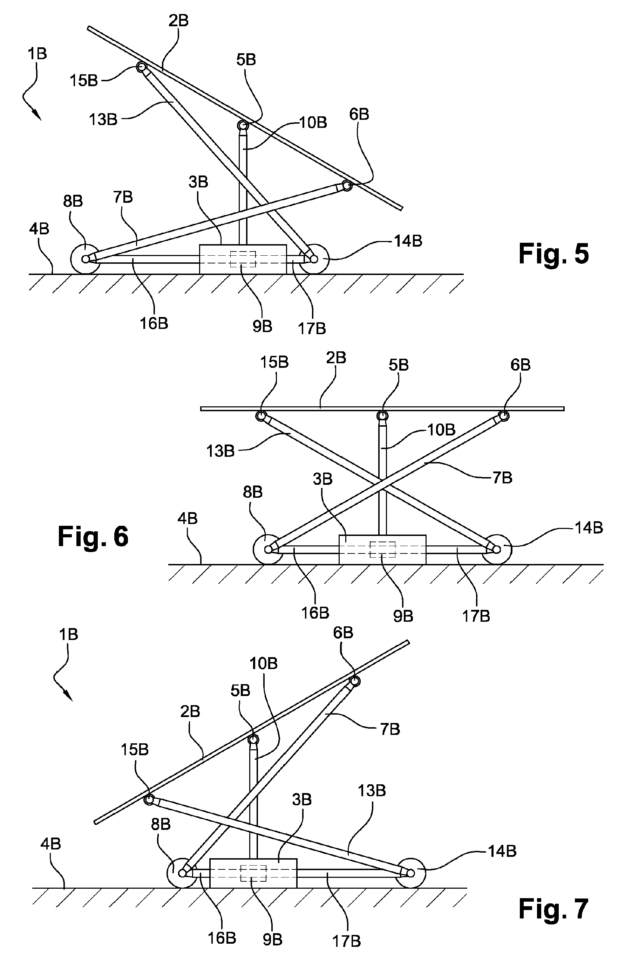

Les figures 5, 6 et 7 représentent une variante de réalisation de l'invention, dans laquelle la base de référence 3B est surmontée d'un mât vertical 10B, à l'extrémité supérieure duquel est agencée la première articulation fixe 5B du panneau solaire 2B, une deuxième et une troisième articulations mobiles 6B,15B étant agencées sur le panneau 2B, de part et d'autre de l'articulation fixe 5B, et recevant deux bras de manoeuvre correspondants 7B,13B, se croisant librement et portant à leurs extrémités respectives des éléments suiveurs 8B,14B, aptes à rester en contact avec la surface fixe ou instable 4B, ces derniers 8B,14B étant reliés entre eux par l'intermédiaire de l'organe d'asservissement 9B en liaison avec des organes de commande 16B,17B, de manière à faire varier angulairement la géométrie de l'ensemble, et conséquemment l'orientation du panneau 2B en fonction de la position du soleil.

Selon un premier mode d'application de l'invention, la base de référence 9,9A,9B ainsi que les éléments suiveurs 8,8A,8B et 14A,14B d'une surface instable 4,4A,4B sont constitués par des flotteurs.

Selon un autre cas d'application, les éléments suiveurs 8,8A,8B et 14A,14B d'une surface stable 4,4A,4B sont constitués respectivement par un point fixe et quatre roues, aptes à rouler directement sur la surface stable ou sur un chariot mobile sur rails posés sur ladite surface.

L'avantage d'une telle plateforme selon l'invention est de pouvoir être rendue hybride car les éléments suiveurs pouvant être constitués par des flotteurs ou des roues, il sera adaptable à toute surface stable ou non stable, telle que sable, eau, station d'épuration ou de lagunage, boue, ordures, tourbière, sol de toute nature.

Quel que soit le cas de figure adopté, la commande de l'organe d'asservissement 9,9A,9B s'effectue par l'intermédiaire d'un inclinomètre (non représenté), mesurant l'inclinaison du panneau 2,2A,2B. Si le panneau 2,2A,2B est trop vertical ou trop horizontal, l'inclinomètre transmet l'information à l'organe d'asservissement, qui va diminuer ou augmenter l'inclinaison du panneau.

Pour améliorer le fonctionnement, l'installation peut être optimisée avec un automate programmable qui va réagir aux ordres de l'inclinomètre selon :
- l'heure, la date et les saisons,
- les conditions météo, grâce à l'ajout d'un nanémomètre et d'un capteur de charge (neige).

Selon un perfectionnement de l'invention, un moteur électrique équipé d'une hélice et d'un ancrage, maintenant la base de référence lorsqu'elle est flottante en son milieu, assure le pivotement du panneau sur son axe.

Le système est alors mobile non plus sur un axe mais sur deux. De ce fait, le rendement est encore accru.

La plateforme comporte une pluralité de modules formés par autant de panneaux solaires, de bases de référence et d'éléments suiveurs, lesdits modules étant assemblés et raccordés électriquement entre eux et montés sur une structure porteuse disposée sur une surface stable ou non stable.

L'avantage d'une plateforme hybride telle qu'elle vient décrite réside dans le fait qu'un même dispositif est adaptable à toutes les situations. Selon qu'il est posé sur une surface stable ou non stable, il suffit de changer les éléments suiveurs qui seront constitués soit par des flotteurs, soit par des roues.

Selon un autre perfectionnement de l'invention, les bases de référence sont disposées en réseau et sont distribuées par des rails (non représentés) sur lesquels est susceptible de circuler un chariot ou nacelle sur lequel sont embarqués des moyens de maintenance des panneaux photovoltaïques.

L'objectif est également de disposer d'un moyen de maintenance permettant à des techniciens d'accéder à toute la surface des panneaux, que ce soit pour de l'entretien (nettoyage, inspection, etc.) ou de maintenance (réparation, changement de panneaux).

## Revendications

1. Plateforme (1,1A,1B) productrice d'électricité à partir de panneaux solaires (2,2A,2B) photovoltaïques et constituée par au moins une base de référence (3,3A,3B) posée sur toute surface fixe ou instable (4,4A,4B), et sur laquelle est disposé au moins un panneau solaire (2,2A,2B), relié d'une part à ladite base (3,3A,3B) par l'intermédiaire d'une articulation fixe (5,5A,5B), disposée à l'extrémité supérieure d'un mât vertical (10,10A,10B) surmontant la base de référence (3,3A,3B), et d'autre part à une articulation mobile ( 6, 6A, 6B) reliée à un bras de manoeuvre (7,7A,7B), à l'extrémité duquel est rapporté un élément suiveur (8,8A,8B), apte à rester en contact avec la surface fixe ou instable (4,4A,4B), **caractérisée en ce qu'**un second bras de manoeuvre (13A), comportant à son extrémité libre un second élément suiveur (14A), apte à rester en contact avec la surface fixe ou instable (4A), est relié au panneau solaire (2A) par l'intermédiaire d'une articulation (15A), disposée sur celui-ci, à l'opposé de l'articulation mobile (6A) du premier élément suiveur (8A), par rapport à l'articulation fixe (5A) du mât vertical (10A) de la base de référence (3A), ledit second bras de manoeuvre (13A) étant assujetti indirectement au premier (7A).

2. Plateforme selon la revendication 1, **caractérisée en ce qu'**un organe d'asservissement (9,9A) est interposé entre le mât vertical (10,10A) et le bras de manoeuvre (7,7A), par l'intermédiaire d'une articulation fixe (11,11A) et d'une articulation mobile (12,12A).

3. Plateforme selon la revendication 1, **caractérisée en ce que** le panneau solaire (2B) comporte des articulations mobiles (6B,15B), agencées de part et d'autre de l'articulation fixe (5B) disposée à l'extrémité supérieure du mât (10B), qui reçoivent deux bras de manoeuvre correspondants (7B,13B), se croisant librement et portant à leurs extrémités respectives des éléments suiveurs (8B,14B), aptes à rester en contact avec la surface fixe ou instable (4B), ces derniers (8B,14B) étant reliés entre eux par l'intermédiaire d'un organe d'asservissement (9B) en liaison avec des organes de commande (16B,17B), de manière à faire varier angulairement la géométrie de l'ensemble, et conséquemment l'orientation du panneau (2B) en fonction de la position du soleil.

4. Plateforme selon l'une des revendications 1 à 3, **caractérisée en ce que** la base de référence (3,3A,3B) ainsi que les éléments suiveurs (8,8A,8B et 14A,14B) d'une surface instable (4,4A,4B) sont constitués par des flotteurs.

5. Plateforme selon l'une des revendications 1 à 3, **caractérisée en ce que** la base de référence (3,3A,3B) ainsi que les éléments suiveurs (8,8A,8B et 14A,14B) d'une surface stable (4,4A,4B) sont constitués respectivement par un point fixe et quatre roues, aptes à rouler directement sur la surface stable ou sur un chariot mobile sur rails posés sur ladite surface.

6. Plateforme selon l'une des revendications 1 à 5, **caractérisée en ce qu'**une pluralité de bases de référence (3,3A,3B) sont disposées en réseau et sont distribuées par des rails sur lesquels est susceptible de circuler un chariot ou nacelle, sur lequel sont embarqués des moyens de maintenance des panneaux photovoltaïques.
